# FASCICULE DE BREVET EUROPEEN

(11) **EP 0 765 770 B1**
(45) Date de publication et mention de la délivrance du brevet: **22.11.2000**
(21) Numéro de dépôt: 96440075.8
(22) Date de dépôt: 27.09.1996
(51) Int. Cl.: B60D 1/173, B60D 1/155

(54) **Attelage mécanique entre un camion et une remorque avec commande de la trajectoire de la remorque**
Kupplungsvorrichtung zwischen einem Lastkraftwagen und einem Anhängerwagen mit Wegläufer-Kontrolle für Anhängerwagen
Coupling device between a truck and a trailer with control of path movement of trailer

(30) Priorité: 28.09.1995 FR 9511586
(43) Date de publication de la demande: 02.04.1997
(73) Titulaire: Lohr Industrie, 67980 Hangenbieten (FR)
(72) Inventeur: Andre, Jean-Luc, 67210 Obernai (FR)
(74) Mandataire: Metz, Paul

(56) Documents cités:
- DE-A- 3 145 871
- DE-A- 3 150 024
- DE-C- 4 136 334
- DE-U- 1 771 844
- FR-A- 2 517 604
- US-A- 1 758 951
- US-A- 2 843 417
- US-A- 3 955 831

## Description

La présente invention se rapporte à un attelage mécanique entre un camion et une remorque, à commande de la trajectoire de la remorque, conformément aux caractéristiques du préambule de la revendication 1.

L'attelage mécanique selon l'invention est formé d'un timon et d'au moins une liaison oblique, rigide, articulée par une de ses extrémités à la remorque et par son autre extrémité au camion.

De façon générale, il est souhaitable que les attelages routiers procurent à la remorque une trajectoire dégageante pour qu'elle se trouve dans une meilleure position dans les virages et en sortie de courbes en vue de mieux suivre la voie routière qui est assignée à l'ensemble camion-remorque.

Les moyens existants procurant le caractère dégageant pour la trajectoire de la remorque permettent non seulement d'éviter le télescopage de la remorque et du camion ou de leur chargement dans les virages, mais aussi de réaliser une véritable commande de trajectoire de la remorque qui a pour but de corriger sa position dans les virages et à la sortie des courbes.

On connaît par DE-U-1 771 844, déposé le 29.06.1956 au nom de KASSBOHRER, un attelage entre un camion et une remorque à train avant directeur.

Cet attelage est formé d'une barre d'attelage et d'une bielle oblique articulée sur une interface de train avant directeur.

Selon la première variante, la barre d'attelage est montée articulée à son extrémité avant sur le crochet de remorquage du camion et à son extrémité arrière sur le rond d'avant train constituant classiquement l'interface entre l'essieu avant et l'attelage.

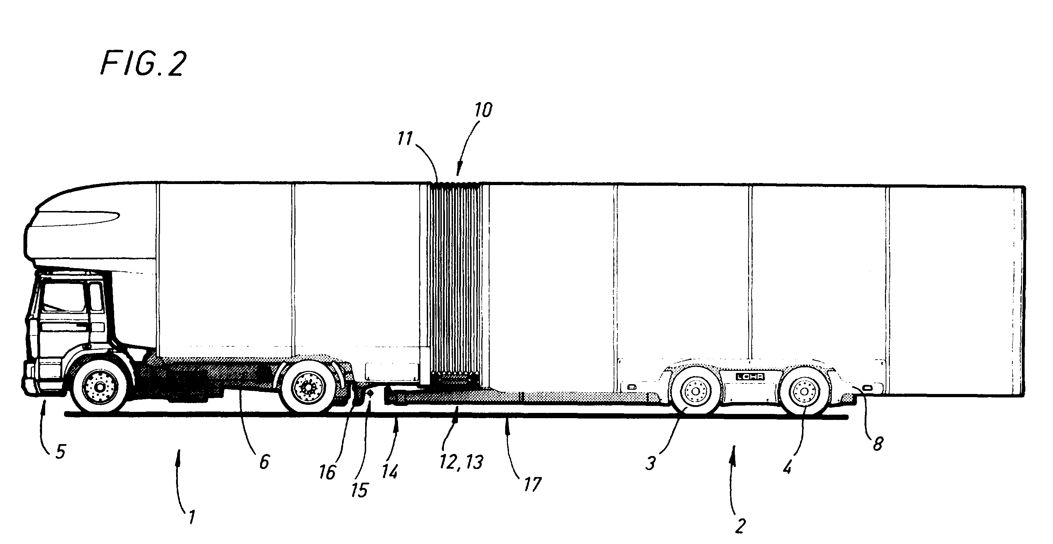

Selon une deuxième variante (figure 2), l'essieu avant est fixe. Un organe intermédiaire de commande assure l'orientation directionnelle des roues avant à partir de la direction de la force de traction exercée sur le timon.

Cette invention met en oeuvre une barre d'attelage, une bielle oblique, une interface de commande et le train avant d'une remorque dite à train avant directeur.

La bielle oblique permet de procurer une trajectoire dégageante en virage du coin de la remorque sur lequel elle est articulée en l'éloignant du coin arrière correspondant du camion.

La barre d'attelage ne transmet pas de charge notable au véhicule tracteur car le poids de la partie avant est supporté par le train avant directeur.

Cet attelage est spécifique à une remorque à train avant directeur.

La présente invention a pour but de procurer une remorque à essieux centraux qui présente ces caractéristiques et assure une trajectoire dégageante au coin de la remorque.

La présente invention a pour but d'arriver à ce résultat avec des moyens simples uniquement mécaniques à savoir un timon de longueur constante ou un timon télescopique passif et libre en extension-retrait, c'est-à-dire non rappelé sous l'effet d'un fluide ou analogue et une ou deux bielle(s) oblique(s) rigide(s), de longueur constante, articulée(s) sur la remorque et sur le camion.

L'invention a aussi pour but avec un attelage mécanique simple de conférer à la remorque une trajectoire dégageante qui permette le transport de charges dépassant de l'avant de la remorque et/ou de l'arrière du camion.

Elle a également pour but de réaliser un attelage purement mécanique et le plus simple possible en vue d'en augmenter la fiabilité et d'en diminuer le coût.

Elle a finalement pour but de permettre l'utilisation d'un soufflet de protection entre le camion et la remorque dont la déformation s'effectue selon une courbure générale en arc de cercle dégageant.

L'invention se propose d'atteindre ces résultats plus spécifiquement avec un attelage conforme aux caractéristiques de la revendication 1.

A cet effet, on prévoit entre le camion et la remorque un attelage mécanique formé d'une part d'un timon dont l'extrémité avant est accrochée à l'arrière, par exemple en porte-à-faux du camion, et dont l'extrémité arrière fait partie d'un centre de pivotement autour d'un axe sensiblement vertical monté sur le châssis de la remorque et d'autre part d'au moins une bielle oblique par rapport à la direction de ligne droite, bielle rigide et de longueur constante, montée articulée par une de ses extrémités sur l'arrière du camion et par son autre extrémité à l'arrière de la remorque.

Conformément à une variante perfectionnée, la liaison formée d'une seule bielle oblique est doublée par une seconde bielle oblique pour se transformer en une liaison à bielles croisées disposées, en configuration de ligne droite, selon des diagonales dans l'espace existant entre le camion et la remorque.

Cette invention, dans son application d'attelage court apporte plusieurs avantages supplémentaires importants dont la possibilité avec un espace camion-remorque réduit de placer des charges indivisibles en porte-à-faux et imbriquées saillantes de l'arrière du camion et/ou de l'avant de la remorque.

Un autre intérêt concerne le moindre coût lié à la simplicité des moyens mis en oeuvre et à leur aspect passif.

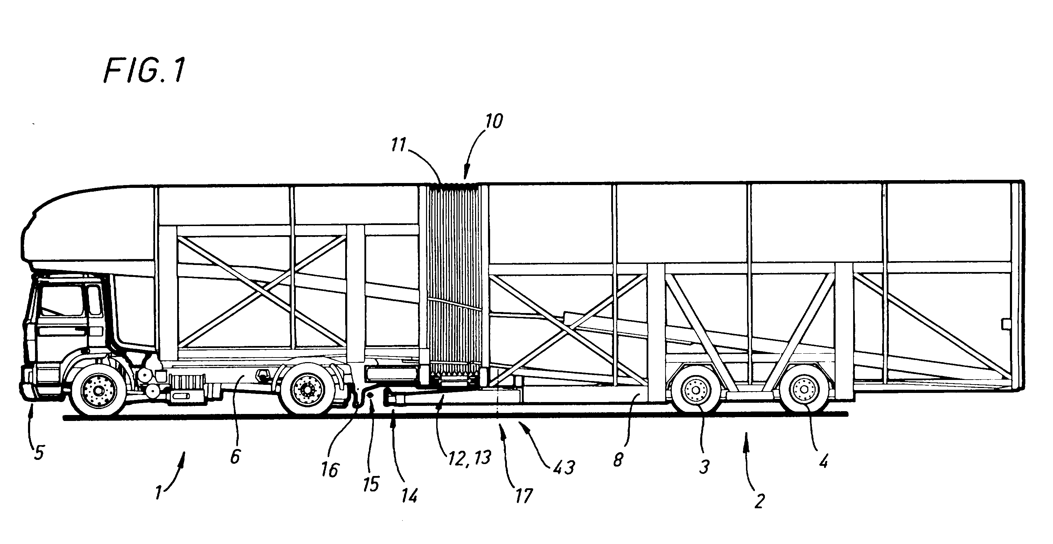

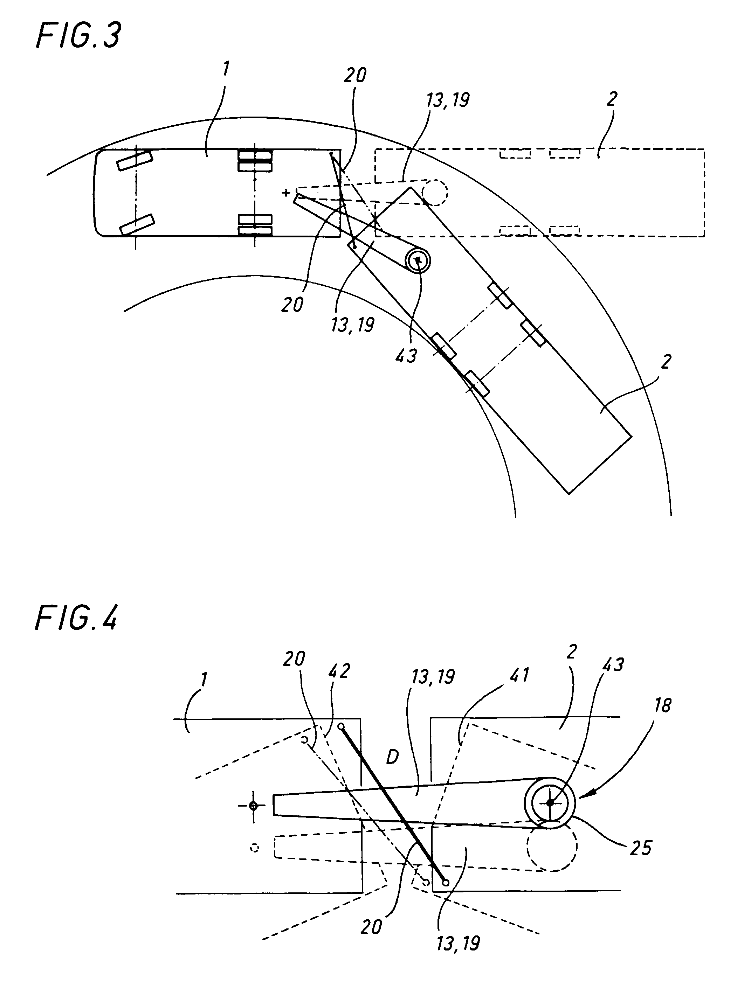

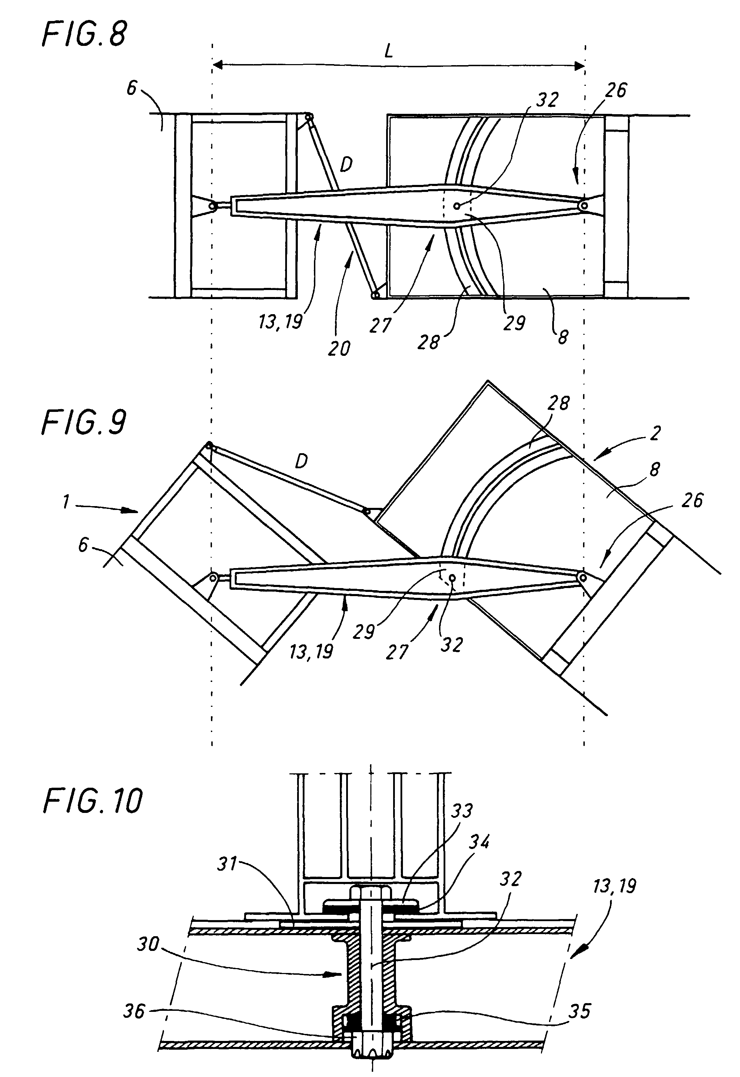

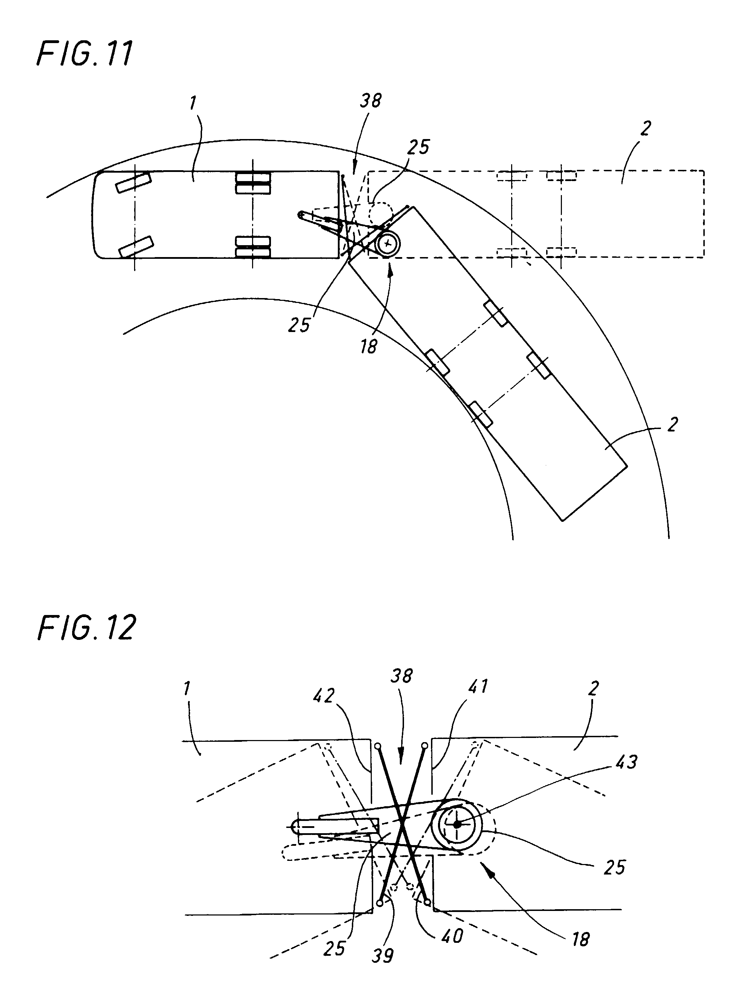

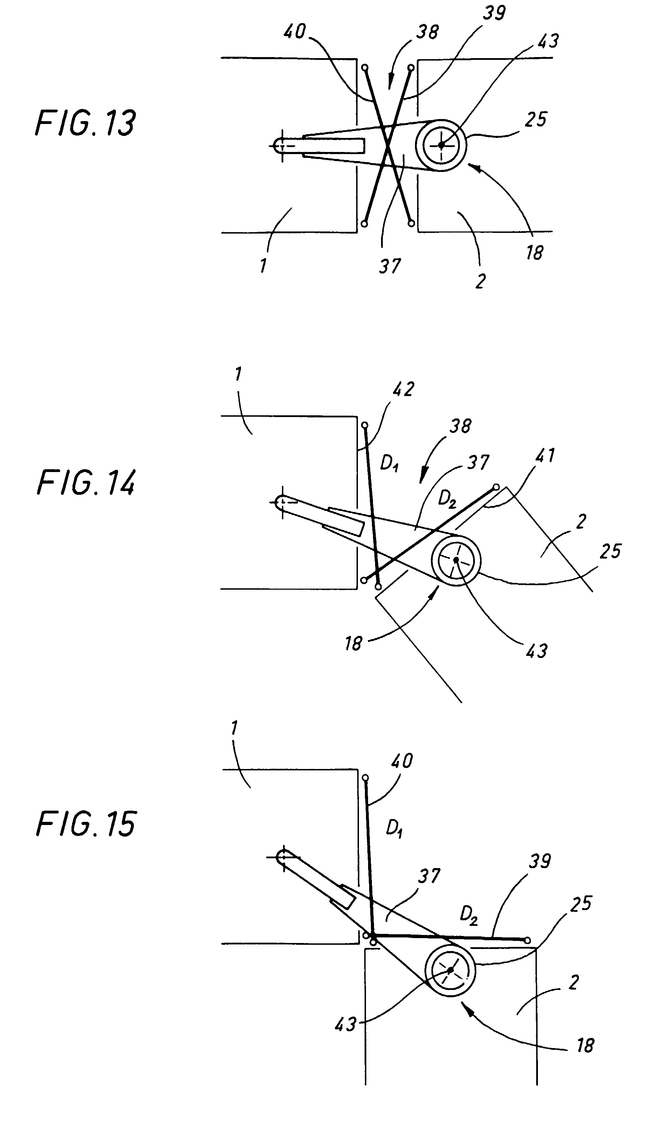

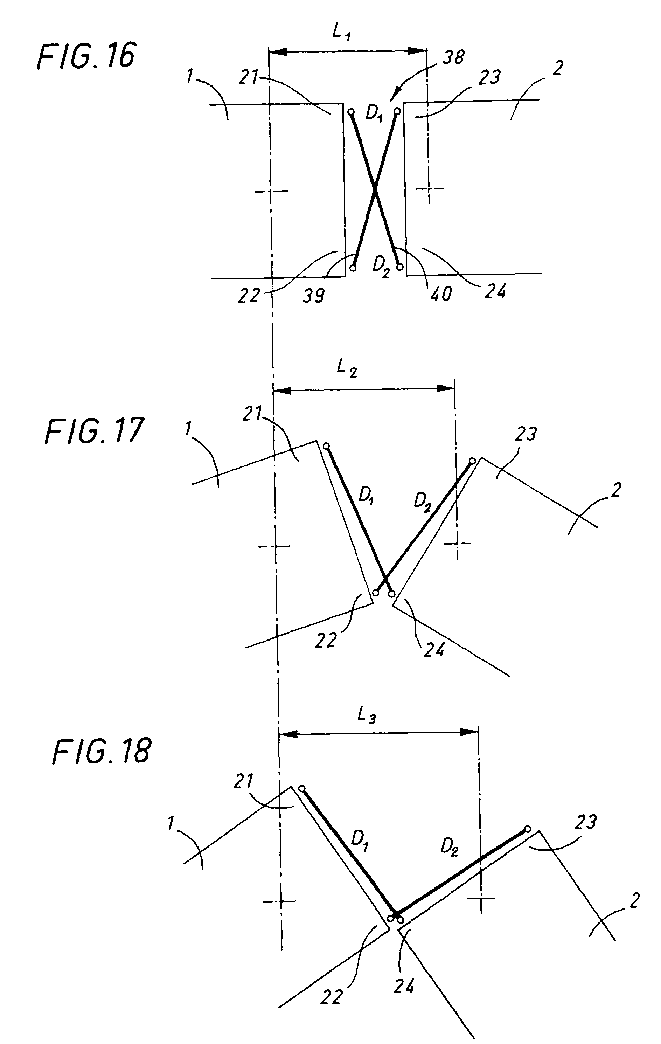

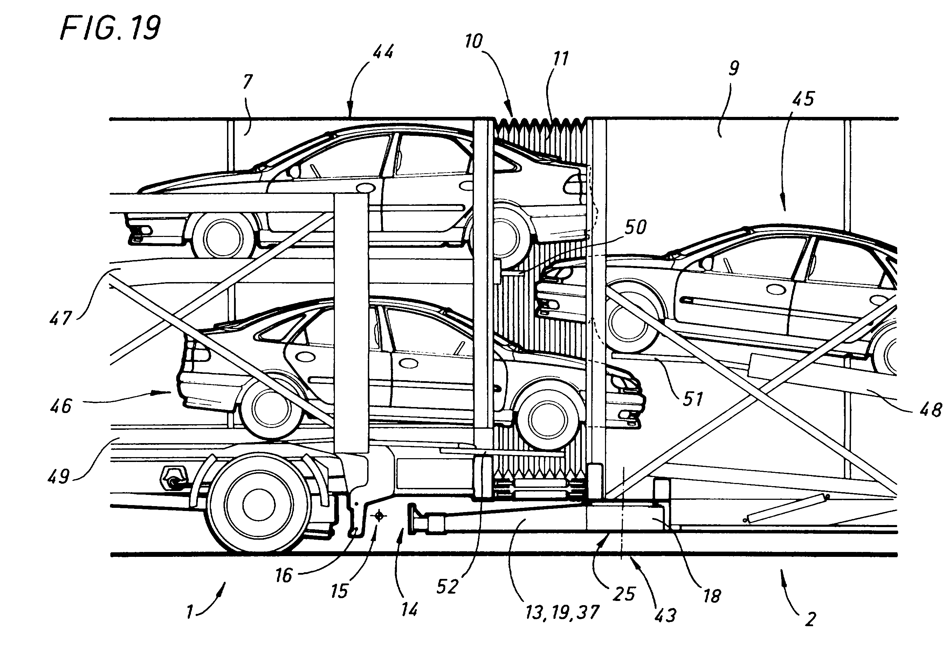

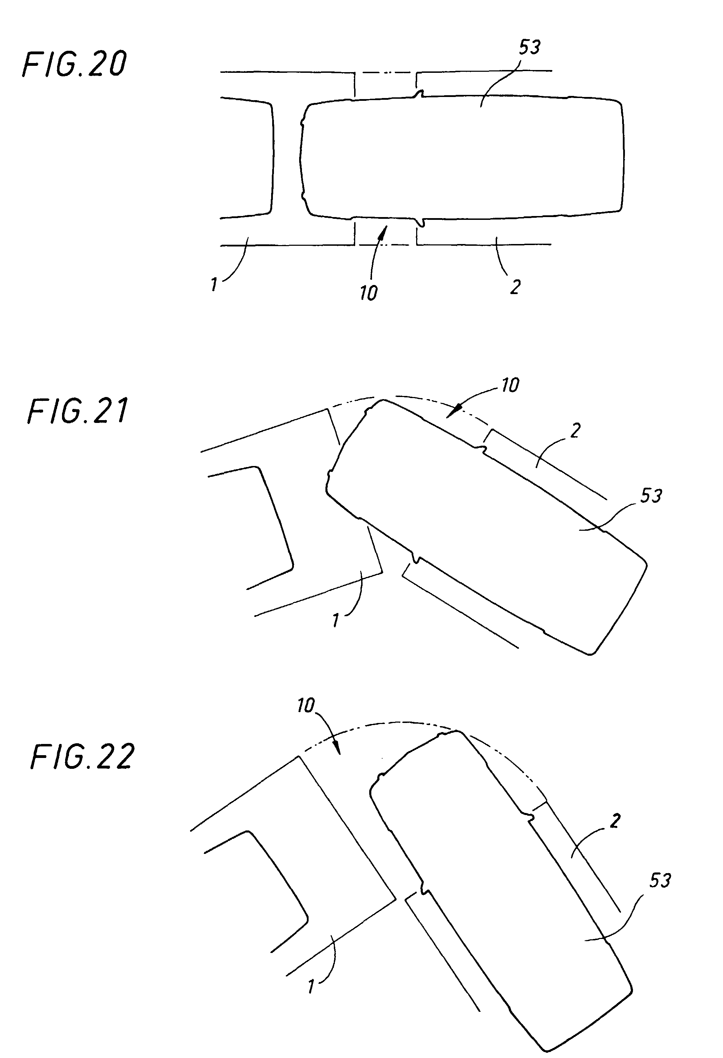

D'autres caractéristiques et avantages de l'invention apparaîtront dans la description qui suit, donnée à titre d'exemple et accompagnée des dessins qui représentent :
. la figure 1 : une vue générale de profil d'une première réalisation de l'ensemble camion-remorque avec un soufflet de protection ;
. la figure 2 : une vue générale de profil de l'ensemble camion-remorque avec soufflet de protection selon une réalisation entièrement couverte ;
. la figure 3 : une vue schématique en plan d'une forme de réalisation à timon rigide de longueur constante dans une position de ligne droite et une position de virage ;
. la figure 4 : une vue géométrique composite illustrant deux positions des moyens constituant l'attelage représenté sur la figure précédente ;
. les figures de 5 à 7 : des schémas successifs montrant la longueur L constante du timon pour la réalisation représentée ci-dessus ;
. les figures de 8 et 9 : des schémas successifs montrant la longueur L constante du timon selon une position de ligne droite et une position de virage pour la variante du premier mode de réalisation ;
. la figure 10 : une vue en coupe longitudinale perpendiculaire au châssis de remorque, le long du timon et à travers la piste montrant la liaison entre le timon et la piste ;
. la figure 11 : une vue schématique en plan d'une variante à timon extensible à deux bielles croisées selon une position de ligne droite et une position de virage ;
. la figure 12 : une vue géométrique illustrant deux positions dont une de ligne droite des moyens constituant l'attelage de la réalisation représentée sur la figure 11 ;
. les figures 13 à 15 : des schémas successifs montrant l'allongement du timon dans le cas de la réalisation à timon extensible ;
. les figures 16 à 18 : des schémas successifs montrant la variation de l'espace camion-remorque dans le cas de la réalisation à timon extensible ;
. la figure 19 : une vue de profil au niveau de l'espace entre camion et remorque montrant une imbrication entre des voitures constituant un exemple de chargement ;
. les figures 20 à 22 : des schémas successifs illustrant les positions en ligne droite puis en virage d'une voiture chevauchant l'espace camion-remorque.

La présente invention se rapporte à un attelage mécanique entre un véhicule à moteur, appelé ici pour des raisons de simplification camion 1, et une remorque 2.

La remorque 2 est représentée comme une remorque à essieux centraux 3 et 4 et sera décrite comme telle.

Si d'autres types de remorques conviennent, il est bien entendu qu'ils sont visés par l'invention.

Le camion 1 présente une cabine 5 et un châssis 6, ce dernier étant surmonté d'une carrosserie 7 fixe ou déposable. Cette carrosserie est prévue par exemple, mais non nécessairement, pour transporter des voitures sur des plates-formes ou des plateaux individuels de chargement.

Il en est de même pour la remorque qui comprend un châssis 8 sur lequel est monté par exemple une carrosserie 9 porte-voitures avec plates-formes ou plateaux individuels de chargement.

Les véhicules, camion et remorque, délimitent entre eux un espace intermédiaire de liaison 10 camion-remorque, par exemple protégé par un soufflet 11, comme représenté sur les figures 1 et 2.

La présente invention porte sur la liaison entre camion et remorque formant un attelage mécanique 12 à commande de la trajectoire de la remorque formé d'un timon pivotant et d'au moins une liaison oblique par rapport à la direction de ligne droite.

Les figures 1 et 2 représentent l'ensemble camion-remorque avec un timon pivotant quelconque 13. Comme on le verra ci-après, ce timon pivotant peut être rigide et de longueur constante dans un premier mode de réalisation à une seule liaison oblique ou bien télescopique libre et passif dans une deuxième forme de réalisation à liaison oblique double.

Le timon pivotant 13 présente d'une part une extrémité avant 14 reliée à un point d'accouplement 15 à crochet porté par un ensemble mécanique transversal 16 solidaire du châssis 6 de camion ou de la carrosserie présentant par exemple une extension arrière en porte-à-faux et d'autre part une extrémité arrière 17 faisant partie ou constituant une des pièces d'un centre de pivotement 18 monté en porte-à-faux à l'avant du châssis 8 de remorque ou au voisinage de celle-ci.

Selon les deux variantes du premier mode de réalisation représentée sur les figures 3 à 10, le timon pivotant 13 est un timon pivotant rigide 19 pivotant autour du centre de pivotement 18. Ce timon est de longueur L constante et la liaison oblique est constituée par une bielle rigide 20 de longueur D constante. Elle traverse en oblique le plan longitudinal médian de ligne droite du véhicule selon une disposition en diagonale et se trouve articulée par ses extrémités au niveau, par exemple d'un coin arrière 21 ou 22 du camion et d'un coin avant 23 ou 24 de la remorque.

Selon la première variante le centre de pivotement 18 est réalisé sous la forme d'un rond d'avant train 25 monté en porte-à-faux à l'avant du châssis 8 de remorque.

Une deuxième variante de la première forme de réalisation, met en oeuvre un centre de pivotement 18 équivalent au rond d'avant train de la première variante qui procure donc les mêmes effets.

Selon cette deuxième variante, le rond d'avant train 25 est remplacé par un axe pivotant d'extrémité 26 monté vertical en sous-face du châssis 8 de remorque en position médiane et perpendiculaire à ce châssis. L'ensemble est complété par un moyen de liaison-soutien 27 de la remorque à l'avant. Ce moyen de liaison-soutien 27 consiste dans l'exemple représenté en une piste 28 en arc de cercle et en un appui-glissant sur cette piste sur une zone de portée 29 formée par la surface du timon en regard de la piste 28 en arc de cercle complétée par une liaison glissante d'assemblage 30 entre le timon et la structure de la piste 28 en arc de cercle. Cette liaison permet de maintenir la partie avant du châssis 8 de remorque contre le timon et d'empêcher ainsi un débattement entre le timon et la remorque dans le cas d'une charge plus importante à l'arrière de la remorque.

Cette liaison permet une sécurité supplémentaire en cas de rupture de l'axe 26 de pivotement.

Plus particulièrement, et comme on peut le constater sur la vue en coupe de la figure 10, la piste en arc de cercle présente en sous face des zones de contact lubrifiées ou revêtues d'une couche ou d'une pièce intercalaire 31 d'une matière ou d'un matériau anti-friction. La liaison 30 est réalisée sous la forme d'un boulon de liaison 32 dont la tête appuie à travers une rondelle plate 33 et un intercalaire anti-friction 34 contre les faces internes des bords de la piste en arc de cercle.

Pour améliorer la stabilité en roulage, le boulon de liaison 32 présente une précontrainte, par exemple sous la forme d'une rondelle 35 à effet élastique prévue à son extrémité inférieure au voisinage de son écrou de serrage 36.

Bien entendu, l'ensemble piste et liaison d'assemblage peut être remplacé par un moyen équivalent d'appui-glissement.

Les articulations d'extrémités de la bielle oblique rigide 20 sont du type à rotules ou des articulations de pivotement à degré(s) supplémentaire(s) permettant le débattement approprié pour absorber les mouvements de roulis et de tangage.

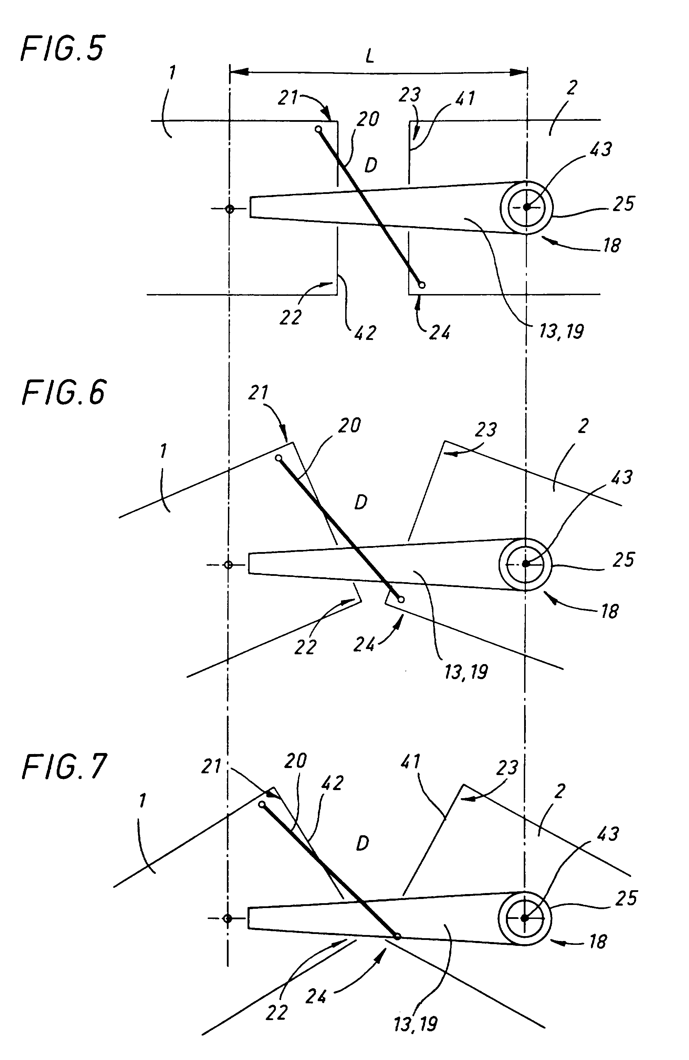

A l'observation des figures 5 à 10 on remarque que la relation entre la direction du camion et celle de la remorque comprend comme contraintes la longueur L constante du timon pivotant et la longueur D constante de la bielle oblique de liaison 20. Seul le timon reprend les efforts dus au report de charge vertical de la remorque.

En fonctionnement dans les courbes, la bielle oblique 20 pousse ou tire le coin opposé de la remorque constituant pour celle-ci une liaison qui lui impose dans les virages une trajectoire s'inscrivant mieux dans la voie qui lui est assignée, comme représenté sur la figure 3. Cette caractéristique résulte de la disposition en diagonale de la bielle oblique 20.

De façon plus générale, le centre de pivotement 18 peut se trouver en un endroit quelconque du châssis 8 de remorque à partir des essieux jusqu'à l'avant de la remorque.

Selon la deuxième forme de réalisation, le timon pivotant 13 est un timon pivotant télescopique mécanique 37, entièrement libre et passif, c'est-à-dire qu'il ne présente aucun moyen actif d'allongement/retrait ou de rappel, mais aussi qu'il coulisse librement sans contrainte par exemple sans force de freinage ou d'amortissement pour présenter des longueurs différentes par exemple L2 entre une valeur minimale L1 et une longueur maximale L3 (figures 16 à 18). Par ailleurs, il est réalisé avec des moyens mécaniques simples. Il s'agit par exemple, d'une poutre creuse dans laquelle vient s'emmancher à coulissement une autre poutre formant la barre du timon pivotant 37.

Bien entendu, le timon pivotant 37 autour du centre de pivotement 18 présente des butées de sécurité destinées à limiter sa course en accélération ou en freinage.

Seul le timon reprend les efforts dus au report de charge vertical de la remorque.

Selon cette deuxième forme de réalisation, le timon pivotant télescopique 37 est complété par une liaison articulée double 38 à deux bielles rigides 39 et 40 constituée par l'addition symétrique à la première bielle 39 d'une deuxième bielle rigide oblique 40 articulée par l'une de ses extrémités à l'arrière du camion et par son autre extrémité à l'avant de la remorque. Ces deux bielles symétriques appelées bielles croisées 39 et 40 de longueur constante égale référencées D1 et D2 s'étendent chacune en oblique et en diagonale par rapport à la direction de ligne droite, d'un des coins 23,24 du front avant 41 de la remorque à un des coins correspondants 21,22 du front arrière 42 du châssis 6 du camion. Les coins propres à l'extrémité d'une même bielle sont diagonalement opposés.

Ces bielles croisées sont articulées par leurs extrémités soit directement soit par l'intermédiaire de pièces de coin solidaires du front avant 41 du châssis de remorque et du front arrière 42 du châssis de camion.

Elles sont montées chacune au niveau des extrémités par des articulations du type à rotule qui permettent d'absorber les mouvements de roulis et de tangage.

Le centre de pivotement 18 peut également ici se trouver en un endroit quelconque du châssis 8 de remorque à partir des essieux jusqu'à l'avant de la remorque.

Pour le premier but visé, il est souhaitable que ces bielles soient les plus longues possibles. La trajectoire de la remorque déborde alors le moins possible par rapport à la trace du camion.

Sans pour autant se limiter, on peut ainsi déterminer les emplacements optimums des points d'articulation sur les fronts avant 41 et arrière 42 respectivement de remorque et de camion.

Il s'agit par exemple des emplacements 21 à 24 au niveau de la base des arêtes, c'est-à-dire à l'extrémité avant du châssis de remorque et à l'extrémité arrière du châssis du camion ou bien légèrement en retrait sous l'un et l'autre des deux châssis comme représenté sur les figures 4 à 7.

A l'observation des figures 13 à 18, on remarque que la relation entre l'orientation du camion et celle de la remorque ne comprend plus comme constantes que les longueurs D1 et D2 des bielles croisées.

Comme il apparait sur les schémas, le fonctionnement symétrique et simultané des deux bielles est analogue à celui du premier mode de réalisation.

Les bielles croisées évitent le télescopage des coins en regard de la remorque et du camion.

Le centre de pivotement 18 est, selon les variantes, le rond d'avant train 25 pivotant autour d'un axe 43 sensiblement vertical (figures 1 à 7 et 11 à 15) ou l'axe de pivotement d'extrémité 26 du timon (figures 8 et 9).

En ce qui concerne la première variante, le rond d'avant train 25 est monté en porte-à-faux à l'avant sous le châssis 8 de remorque. Il est formé classiquement d'un corps circulaire, solidaire du châssis de remorque sur lequel est montée une pièce cylindrique solidaire de l'extrémité du timon pivotant. Le retour de la pièce cylindrique appuie sur une couronne circulaire de billes.

L'axe 43 du rond d'avant train est préférentiellement légèrement incliné vers l'avant de façon à améliorer la stabilité de l'ensemble routier en roulage.

Il y a lieu de remarquer ici que le timon peut également être attelé à une carrosserie déposable portée par le camion et non pas directement sur le camion.

Comme illustré par les figures 16 à 19, l'invention présente l'important avantage de permettre le transport, en porte-à-faux ou en saillie dans l'espace intermédiaire entre les deux véhicules, de charges indivisibles, par exemple des voitures telles que 44,45 et 46 portées par des plateaux individuels 47,48 et 49 équipés de rallonges 50,51 et 52. Ceci confère à l'invention un intérêt tout particulier dans le cadre du transport de voitures notamment dans le cas d'un transport bâché ou plus généralement fermé et comportant un soufflet entre camion et remorque.

Cette possibilité de chevauchement de l'espace intermédiaire de liaison 10 est plus particulièrement illustrée par les figures 17 à 19 montrant en virage, dans le cas d'une voiture 53 chevauchante, de quelle façon l'espace intermédiaire de liaison 10 peut être exploité par l'invention. Le caractère dégageant de la liaison permet d'augmenter sensiblement le porte-à-faux de la voiture au-dessus de la limite arrière du camion sans risquer de télescoper dans les virages les structures voisines de sa carrosserie.

## Revendications

1. Attelage comportant un camion (1) et une remorque (2) ainsi qu'une liaison entre le camion (1) et la remorque (2) permettant le contrôle de la trajectoire de la remorque en vue d'obtenir une trajectoire dégageante, liaison formée d'une part d'un timon (13) dont l'extrémité avant (14) est accrochée, libre en pivotements, à l'arrière du camion (1) et dont l'extrémité arrière (17) fait partie d'un centre de pivotement (18) autour d'un axe sensiblement vertical, le centre de pivotement (18) étant monté sur le châssis de la remorque (2) et d'autre part d'au moins une bielle oblique (20,39,40) en position diagonale de longueur constante dont une extrémité est articulée à l'avant de la remorque (2) et l'extrémité opposée à l'arrière du camion (1), attelage caractérisé en ce que la remorque (2) comporte en position sensiblement centrale ou à l'arrière un train d'au moins un essieu (3,4) laissant libre la partie du châssis (8) de remorque (2) s'étendant depuis son extrémité avant jusqu'à l'essieu avant (3) du train d'au moins un essieu (3,4) et en ce que le centre de pivotement (18) est monté sur la partie libre du châssis (8) de remorque (2) dans une position en porte-à-faux située entre l'avant de la remorque (2) et l'essieu avant (3) du train d'au moins un essieu (3,4), en ce que au moins la bielle oblique (20,39,40) relié de façon articulée en position diagonale l'avant de la remorque (2) à l'arrière du camion (1), et en ce que le timon (13) est immobile en mouvements verticaux par rapport au châssis (8) de remorque (2), l'ensemble constitué du timon (13) et du centre de pivotement (18) formant une liaison permanente de support ou de retenue pour toute force ou charge verticale s'exerçant sur la remorque (2).

2. Attelage mécanique selon la revendication 1 caractérisé en ce que l'attelage comporte une bielle oblique unique (20) et un timom (13) de longueur fixe.

3. Attelage mécanique selon l'une quelconque des revendications précédentes caractérisé en ce que le centre de pivotement (18) est un rond d'avant train (25) de remorque pivotant autour d'un axe (43).

4. Attelage mécanique selon la revendication précédente, caractérisé en ce que l'axe de pivotement (43) est légèrement incliné vers l'avant.

5. Attelage mécanique selon l'une des revendications 1, 2 ou 3 caractérisé en ce que le centre de pivotement (18) est un axe de pivotement (26) à l'extrémité arrière (17) du timon pivotant (13).

6. Attelage mécanique selon la revendication précédente caractérisé en ce que le centre de pivotement (26) est complété par un moyen de soutient (27) de l'avant de la remorque (2).

7. Attelage mécanique selon la revendication précédente caractérisé en ce que le moyen de soutien est un moyen de liaison-soutien (27).

8. Attelage mécanique selon la revendication 6 ou 7 caractérisé en ce que le moyen de soutien ou de liaison-soutien (27) consiste en une piste (28) en arc de cercle solidaire de la remorque et en un appui-glissant de la piste sur une zone de portée (29) formée par la surface du timon (13) en regard de la piste (28) en arc de cercle complétée par une liaison glissante d'assemblage (30) entre le timon (13) et la structure de la piste (28) en arc de cercle et en ce que la liaison glissante d'assemblage (30) entre le timon (13) et la structure de la piste (28) en arc de cercle est réalisée sous la forme d'un boulon de liaison (32) dont la tête appuie à travers une rondelle (33) et un intercalaire anti-friction (34) contre les faces internes des bords de la piste (28) en arc de cercle, le boulon de liaison (32) présentant une précontrainte sous la forme d'une rondelle (35) à effet élastique prévue à son extrémité inférieure au voisinage de son écrou de serrage (36).

9. Attelage mécanique selon l'une quelconque des revendications précédentes caractérisé en ce que la bielle oblique unique est doublée par une bielle oblique identique et symétrique de manière à former une liaison (30) à deux bielles croisées obliques (39,40), disposées en diagonale par rapport à l'axe de ligne droite et identiquement articulées et en ce que le timon pivotant immobile en mouvements verticaux est un timon télescopique (37).

10. Attelage mécanique selon la revendication précédente caractérisé en ce que le timon pivotant télescopique (37) est passif et libre en mouvements d'allongement ou de rétraction.

11. Attelage mécanique selon l'une quelconque des revendications précédentes caractérisé en ce que les extrémités de la ou des bielle(s) oblique(s) sont articulées chacune sur un coin avant (23,24) de remorque et arrière (21,22) de camion.

12. Attelage mécanique selon l'une quelconque des revendications précédentes caractérisé en ce que les articulations d'extrémité de la ou des bielle(s) sont des articulations du type à rotule.

13. Attelage mécanique selon l'une quelconque des revendications précédentes caractérisé en ce que l'espace intermédiaire de liaison (10) situé entre le camion (1) et la remorque (2) est protégé par un soufflet (11).

14. Attelage mécanique selon l'une quelconque des revendications précédentes caractérisé en ce que l'espace intermédiaire de liaison (10) situé entre le camion (1) et la remorque (2) est de faible longueur.

## Patentansprüche

1. Kupplungsvorrichtung mit einem Lastwagen (1) und einem Anhänger (2) sowie einer Verbindung zwischen dem Lastwagen (1) und dem Anhänger (2), die eine Steuerung des Fahrwegs des Anhängers im Sinne eines distanzierenden Fahrwegs ermöglicht, wobei die Verbindung einerseits von einer Deichsel (13), deren vorderes Ende (14) frei schwenkbar am Heck des Lastwagens (1) eingehängt ist und deren hinteres Ende (17) Teil eines am Grundrahmen des Anhängers (2) angeordneten Schwenkzentrums (18) mit einer im wesentlichen vertikalen Achse ist, andererseits von wenigstens einem Schräglenker (20, 39, 40) in diagonaler Stellung mit konstanter Länge gebildet ist, dessen eines Ende an der Front des Anhängers (2) und dessen entgegengesetztes Ende am Heck des Lastwagens (1) angelenkt ist, dadurch gekennzeichnet, daß der Anhänger (2) in seinem im wesentlichen zentralen oder hinteren Bereich ein Fahrwerk mit wenigstens einer Achse (3, 4) aufweist, die den Bereich des Grundrahmens (8) des Anhängers (2) von seinem vorderen Ende bis zur vorderen Achse (3) des Fahrwerks mit wenigstens einer Achse (3, 4) freiläßt, daß das Schwenkzentrum (18) in dem freien Bereich des Grundrahmens (8) des Anhängers (2) in einer vorkragenden Position zwischen der Front des Anhängers (2) und der vorderen Achse (3) des Fahrwerks mit wenigstens einer Achse (3, 4) angeordnet ist, daß zumindest der Schräglenker (20, 39, 40) die Front des Anhängers (2) mit dem Heck des Lastwagens (1) in der diagonalen Position gelenkig verbindet, und daß die Deichsel (13) für Vertikalbewegungen bezüglich des Grundrahmens (8) des Anhängers (2) unbeweglich ist, wobei die aus der Deichsel (13) und dem Schwenkzentrum (18) gebildete Einheit eine ständige Halte- oder Stützverbindung für jede auf den Anhänger (2) wirkende Vertikalkraft oder -last bildet.

2. Mechanische Kupplungsvorrichtung nach Anspruch 1, dadurch gekennzeichnet, daß die Kupplungsvorrichtung einen einzigen Schräglenker (20) und eine Deichsel (13) unveränderlicher Länge aufweist.

3. Mechanische Kupplungsvorrichtung nach einem der vorangehenden Ansprüche, dadurch gekennzeichnet, daß das Schwenkzentrum (18) ein um eine Achse (43) schwenkbares Rundprofil eines vorderen Drehgestells (25) des Anhängers ist.

4. Mechanische Kupplungsvorrichtung nach dem vorangehenden Anspruch, dadurch gekennzeichnet, daß die Schwenkachse (43) schwach nach vorne geneigt ist.

5. Mechanische Kupplungsvorrichtung nach einem der Ansprüche 1, 2 oder 3, dadurch gekennzeichnet, daß das Schwenkzentrum (18) eine Schwenkachse (26) am hinteren Ende der schwenkbaren Deichsel (13) ist.

6. Mechanische Kupplungsvorrichtung nach dem vorangehenden Anspruch, dadurch gekennzeichnet, daß das Schwenkzentrum (26) durch ein vorderes Stützmittel (27) des Anhängers (2) ergänzt ist.

7. Mechanische Kupplungsvorrichtung nach dem vorangehenden Anspruch, dadurch gekennzeichnet, daß das Stützmittel ein Stützverbindungsmittel (27) ist.

8. Mechanische Kupplungsvorrichtung nach Anspruch 6 oder 7, dadurch gekennzeichnet, daß das Stütz- oder Stützverbindungsmittel (27) aus einer an dem Anhänger angeordneten kreisbogenförmigen Spur (27) und einem Gleitanschlag der Spur in einem Abstützbereich (29) besteht, der durch die der kreisbogenförmigen Spur (28) zugekehrten Oberfläche der Deichsel (13) gebildet und von einer Gleitverbindungseinheit (30) zwischen der Deichsel (13) und der Struktur der kreisbogenförmigen Spur (28) ergänzt ist, und daß die Gleitverbindungseinheit (30) zwischen der Deichsel (13) und der Struktur der kreisbogenförmigen Spur (28) nach Art eines Verbindungsbolzens (32) gebildet ist, dessen Kopf eine Scheibe (33) und eine Antifriktionszwischenlage (34) durchsetzend den Innenseiten der Ränder der kreisbogenförmigen Spur (28) anliegt, wobei der Verbindungsbolzen (32) eine Vorspannung in Form einer an seinem inneren Ende in der Nähe seiner Spannmutter (36) vorgesehenen elastisch wirkenden Unterlegscheibe (35) bildet.

9. Mechanische Kupplungsvorrichtung nach einem der vorangehenden Ansprüche, dadurch gekennzeichnet, daß der einzige Schräglenker durch einen identischen und symmetrischen Schräglenker verdoppelt ist, um eine Verbindung (30) mit zwei überkreuz angeordneten Schräglenkern (39, 40) zu bilden, die bezüglich der Längsmittelachse diagonal angeordnet und auf identische Weise angelenkt sind, und daß die für Vertikalbewegungen unbewegliche, schwenkbare Deichsel eine Teleskopdeichsel (37) ist.

10. Mechanische Kupplungsvorrichtung nach dem vorangehenden Anspruch, dadurch gekennzeichnet, daß die schwenkbare Teleskopdeichsel (37) passiv und frei bezüglich Verlängerungs- oder Verkürzungsbewegungen ist.

11. Mechanische Kupplungsvorrichtung nach einem der vorangehenden Ansprüche, dadurch gekennzeichnet, daß die Enden des oder der Schräglenker(s) jeweils an einer frontseitigen Ecke (23, 24) des Anhängers und an einer heckseitigen Ecke (21, 22) des Lastwagens angelenkt sind.

12. Mechanische Kupplungsvorrichtung nach einem der vorangehenden Ansprüche, dadurch gekennzeichnet, daß die endseitigen Gelenke des oder der Schräglenker(s) nach Art von Kugelgelenken ausgebildet sind.

13. Mechanische Kupplungsvorrichtung nach einem der vorangehenden Ansprüche, dadurch gekennzeichnet, daß der Zwischenraum (10) der Verbindung zwischen dem Lastwagen (1) und dem Anhänger (2) durch einen Balg (11) geschützt ist.

14. Mechanische Kupplungsvorrichtung nach einem der vorangehenden Ansprüche, dadurch gekennzeichnet, daß der Zwischenraum (10) der Verbindung zwischen dem Lastwagen (1) und dem Anhänger (2) von geringer Länge ist.

## Claims

1. Coupling gear comprising a truck (1) and a trailer (2) as well as a linkage between the truck (1) and the trailer (2) which allows the control of the path of the trailer with a view to obtaining a clearance path, which linkage is formed, on the one hand, by a drawbar (13) whose front end (14) is fastened, free to pivot, to the rear of the truck (1) and whose rear end (17) forms part of a centre (18) for pivoting about a substantially vertical axis, the pivoting centre (18) being mounted on the chassis of the trailer (2), and, on the other hand, by at least one diagonally positioned oblique connecting rod (20, 39, 40) which is of constant length and of which one end is articulated to the front of the trailer (2) and the opposing end to the rear of the truck (1), the coupling gear being characterised in that the trailer (2) comprises, at a substantially central position or at the rear, a train of at least one axle (3, 4) which leaves free that portion of the chassis (8) of the trailer (2) which extends from the front end thereof as far as the front axle (3) of the train of at least one axle (3, 4), and in that the pivoting centre (18) is mounted on the free portion of the chassis (8) of the trailer (2) in a position which is out of true and which is located between the front of the trailer (2) and the front axle (3) of the train of at least one axle (3, 4), in that at least the oblique connecting rod (20, 39, 40) connects in an articulated manner and at a diagonal position the front of the trailer (2) to the rear of the truck (1), and in that the drawbar (13) is fixed in terms of vertical movements relative to the chassis (8) of the trailer (2), the assembly constituted by the drawbar (13) and the pivoting centre (18) forming a permanent support or retention linkage for any vertical force or load acting on the trailer (2).

2. Mechanical coupling gear according to claim 1, characterised in that the coupling gear comprises a single oblique connecting rod (20) and a drawbar (13) of fixed length.

3. Mechanical coupling gear according to either of the preceding claims, characterised in that the pivoting centre (18) is a circular member of the front train (25) of the trailer and pivots about an axis (43).

4. Mechanical coupling gear according to the preceding claim, characterised in that the pivoting axis (43) is slightly inclined forwards.

5. Mechanical coupling gear according to any one of claims 1, 2 or 3, characterised in that the pivoting centre (18) is a pivoting axis (26) at the rear end (17) of the pivoting drawbar (13).

6. Mechanical coupling gear according to the preceding claim, characterised in that the pivoting centre (26) is completed by a support means (27) of the front of the trailer (2).

7. Mechanical coupling gear according to the preceding claim, characterised in that the support means is a linkage-support means (27).

8. Mechanical coupling gear according to claim 6 or claim 7, characterised in that the support means or linkage-support means (27) comprises a track (28), which is in the shape of a circular arc and which is integral with the trailer, and a slide-support of the track on a supporting region (29) which is formed by the surface of the drawbar (13) opposite the track (28) in the shape of a circular arc which is completed by a sliding assembly linkage (30) between the drawbar (13) and the structure of the track (28) in the shape of a circular arc, and in that the sliding assembly linkage (30) between the drawbar (13) and the structure of the track (28) in the shape of a circular arc is produced in the form of a connecting pin (32), whose head presses, by means of a washer (33) and an anti-friction insert (34), against the inner faces of the edges of the track (28) in the shape of a circular arc, the connecting pin (32) having a mechanical bias in the form of a washer (35) which acts resiliently and which is provided at the lower end adjacent to the tightening nut (36) thereof.

9. Mechanical coupling gear according to any one of the preceding claims, characterised in that the single oblique connecting rod is complemented by an oblique connecting rod which is identical and symmetrical in order to form a linkage (30) with two oblique crossed connecting rods (39, 40), which are arranged diagonally relative to the straight line axis and which are identically articulated, and in that the pivoting drawbar which is fixed in terms of vertical movements is a telescopic drawbar (37).

10. Mechanical coupling gear according to the preceding claim, characterised in that the telescopic pivoting drawbar (37) is passive and free to move in an extending or retracting manner.

11. Mechanical coupling gear according to any one of the preceding claims, characterised in that the ends of the oblique connecting rod(s) are each articulated to a front corner (23, 24) of the trailer and a rear corner (21, 22) of the truck.

12. Mechanical coupling gear according to any one of the preceding claims, characterised in that the end articulations of the connecting rod(s) are articulations of the spherical plain bearing type.

13. Mechanical coupling gear according to any one of the preceding claims, characterised in that the intermediate connecting space (10) located between the truck (1) and the trailer (2) is protected by a bellows (11).

14. Mechanical coupling gear according to any one of the preceding claims, characterised in that the intermediate connecting space (10) located between the truck (1) and the trailer (2) is of short length.
